# EUROPÄISCHE PATENTSCHRIFT

(11) **EP 0 668 138 B1**
(45) Veröffentlichungstag und Bekanntmachung des Hinweises auf die Patenterteilung: **09.12.1998**
(21) Anmeldenummer: 94116867.6
(22) Anmeldetag: 26.10.1994
(51) Int. Cl.: B29C 43/30

(54) **Mehrfarbig gemusterter Bodenbelag sowie Verfahren zu seiner Herstellung**
Multicolor patterned floor covering and method for its manufacturing
Revêtement de sol multicolore à motif et procédé pour sa fabrication

(30) Priorität: 22.02.1994 DE 4405589
(43) Veröffentlichungstag der Anmeldung: 23.08.1995
(73) Patentinhaber: Firma Carl Freudenberg, 69469 Weinheim (DE)
(72) Erfinder: Graab, Gerhard, Dr., D-68199 Mannheim 24 (DE); Nahe, Thorsten, D-67134 Birkenheide (DE); Heckel, Klaus, Dr., D-69517 Gorxheimertal (DE); Grünhag, Helmut, D-69502 Hemsbach (DE); Rischer, Dieter, D-69518 Absteinach (DE)

(56) Entgegenhaltungen:
- EP-A- 0 582 770
- FR-A- 1 167 760
- GB-A- 227 324
- US-A- 2 962 081
- US-A- 2 995 179

## Beschreibung

Die Erfindung befaßt sich mit einem mehrfarbig gemusterten Bodenbelag sowie mit einem Verfahren zur Herstellung desselben.

Aus EP-A-0 582 770 ist ein mehrfarbig gemusterter Bodenbelag sowie ein Verfahren zu seiner Herstellung der gattungsgemäßen Art bekannt. Hierbei umfaßt das Granulat zumindest zwei voneinander und von der Bahn abweichend eingefärbte Fraktionen von Partikeln, welche zumindest im Bereich der Oberseite mit einer im wesentlichen gleichmäßigen Verteilung eingebettet sind. Durch die Abstimmung der in den Fraktionen enthaltenen Partikel nach Menge und Farbe auf die Menge und Farbe der Grundbahnin einer solchen Weise, daß die sich bei ihrer homogenen Durchmischung ergebende Mischfarbe und die Farbe der Grundbahn im wesentlichen übereinstimmen, wird eine Wiederverwendung von entstehenden Abfallstücken ggf. unter Rückführung der Abfallstücke in den gleichen Herstellungsprozeß ermöglicht. Somit läßt sich bei der Wiederverwendung der Abfallstücke der entstehende Farbton vorausbestimmen.

Aus FR-A-1 167 760 ist ein mehrfarbig gemusterter Bodenbelag einer Dicke von 1 bis 4 mm bekannt, welcher aus einer Bahn, die eine erste Farbe aufweist, und aus einem abweichend von der Bahn eingefärbten Granulat besteht, das zumindest im Bereich der Oberseite in die Bahn eingebettet ist. Ferner sind dort mehrere hierfür verwendbare, thermoplastische, polymere Werkstoffe aufgeführt, von denen Polyvinylchlorid bevorzugt wird. Auch wird in FR-A-1 167 760 ein Verfahren zur Herstellung eines solchen Bodenbelags, insbesondere aus PVC, beschrieben, bei dem zumindest zwei abweichend gefärbte Fraktionen des Ausgangswerkstoffs unter Verwendung zweier gegensinnig und mit gleicher Geschwindigkeit umlaufender Walzen mit übereinstimmenden Durchmessern in die Gestalt einer Bahn überführt werden. Dabei werden die Granulate unter Druck in ein thermoplastisches Grundmaterial eingepreßt, anschließend erfolgt dann ein Erhitzung zumindestens bis zur Erweichungstemperatur des Grundmaterials und eine nochmalige Pressung, so daß das Grundmaterial die Partikel allseitig umschließt. Bei dieser Herstellungweise ergibt sich die Schwierigkeit, daß die stets anfallenden Abfallstücke aus Randbeschnitt und Produktionsresten die jeweils verwendeten Farbtöne aufweisen und daher nicht im gleichen Verfahrensprozeß sowie nur in beschränktem Maße für andere Recyclingprodukte einsetzbar sind.

Aus US-A-2 995 179 ist ein farbiger Bodenbelag und ein Verfahren zur Herstellung desselben bekannt. Hierbei werden in eine Grundmaterialbahn in die Oberseite desselben Partikel verteilt und eingebettet, welche zufallsverteilt angeordnet oder in vorbestimmter Weise zur Bildung eines Musters ausgerichtet werden können. Die Farben dieser Partikel unterscheiden sich von der Farbe der Grundmaterialbahn und verleihen dem Bodenbelag ein dreidimensionales Erscheinungsbild. Hierbei werden laminierte Partikel bzw. Partikel mit einem Schichtaufbau eingebettet, welche eine erste gefärbte Oberfläche und eine weitere gefärbte Oberfläche haben, die unter der ersten gefärbten Oberfläche liegt aber geringfügig zu dieser verschoben ist. Durch die entsprechende Anordnung der laminierten Partikel in der Oberfläche des Bahngrundmaterials kann man verschiedene Effekte, wie Streifeneffekte oder dergleichen erzielen. Die hierbei eingesetzten laminierten Partikel umfassen aber immer übereinander jedoch gesondert voneinander vorgesehene und unterschiedlich gefärbte Schichten.

Der Erfindung liegt die Aufgabe zugrunde, einen Bodenbelag und ein Verfahren zur Herstellung desselben bereitzustellen, bei welchem sich das optische Erscheinungsbild des Bodenbelags auf einfache Weise ansprechender und insbesondere in weitem Maße variierbar machen läßt.

Nach der Erfindung wird hierzu einerseits ein Bodenbelag nach dem Patentanspruch 1 sowie ein Verfahren zur Herstellung desselben nach dem Patentanspruch 10 bereitgestellt. Bevorzugte Weiterbildungen der Erfindung sind in den jeweils zugeordneten, abhängigen Ansprüchen wiedergegeben.

In der Beschreibung und den Ansprüchen ist im Zusammenhang mit der Farbübereinstimmung zu verstehen, daß die Mischfarbe und die erste Farbe im wesentlichen übereinstimmen. Unter Berücksichtigung der Anforderungen in der Praxis ist es dem Fachmann geläufig, daß geringfügige Farbabweichungen zwischen der Mischfarbe und der ersten Farbe zwar optisch oder auch meßtechnisch erfaßbar sind, aber der praktischen Anwendung des Bodenbelags nicht entgegenstehen.

Beim erfindungsgemäßen Bodenbelag haben die kontrastfarbenen Partikel mindestens zwei voneinander und von der Bahn abweichend eingefärbte Partikelsektionen, so daß zumindest drei verschiedenfarbige Bereiche vorhanden sind. Hierdurch läßt sich das optische Erscheinungsbild des Bodenbelags ansprechender gestalten, und es läßt sich in weitem Maße variieren.

Wenn die Partikel so dicht benachbart angeordnet sind, daß sich eine gegenseitige Berührung ergibt, so ist das äußere Erscheinungsbild des so erhaltenen Bodenbelags maßgeblich durch Struktur und Einfärbung der Partikel bestimmt. Die Partikel können aber auch in einem gegenseitigen Abstand voneinander angeordnet werden, so daß das äußere Erscheinungsbild eines solchen Bodenbelags maßgeblich durch die Farbe der Bahn bestimmt ist, wobei die Partikel eine Auflockerung des Erscheinungsbildes bewirken.

Die Partikel können in einem willkürlich vorgegebenen Muster verteilt sein, beispielsweise nach Art von Buchstaben, Worten und/oder Piktogrammen

Eine besonders präzise vorherbestimmbare Verteilung der Partikel läßt sich erzielen, wenn diese nur in die Oberseite und/oder in die Unterseite der Bahn eingebettet sind. Vorteilhafterweise ist bei einer solchen Ausführung die Menge der in die Oberseite der Bahn eingebetteten Partikel größer als die Menge der in die Unterseite eingebetteten Partikel.

Die Verfahrensführung nach der Erfindung ist derart gewählt, daß das gebrauchsfertige Produkt thermisch nicht mehr erweichbar ist. Es zeichnet sich durch eine große chemische, mechanische und thermische Beständigkeit aus, und läßt sich unter Vermeidung jeglicher Abfallstoffe kostengünstig herstellen.

Bei einer vorteilhaften Ausgestaltung des Verfahrens erfolgt die Aufgabe der Schüttungen für die Granulate und die Bahn mit einer homogenen ersten Farbe und den kontrastfarbenen Partikeln in einem Spalt zwischen um eine horizontale Achse umlaufende Walze derart, daß eine gegenseitige Durchmischung der Farbgrenzen der die Granulate bildenden Partikel vermieden wird, und daß die Schüttung porenfrei verdichtet wird. Vorzugsweise wird dem ersten Granulat das zweite Granulat bezogen auf die Mitte des Spalts relativ in Richtung der einen und/oder der anderen Walze verlagert zugeführt. Es ist dadurch nicht den erheblichen Scherkräften ausgesetzt, die sich in der Mitte des Spalts ergeben. Vermutlich ist das präzise und von Farbvermischungen freie Musterungsbild des erfindungsgemäßen Bodenbelags maßgebend hierauf zurückzuführen.

Wenn gemäß einer bevorzugten Ausführungsform des Verfahrens die mechanische Beanspruchung der kontrastfarbenen Partikel und Partikelsektionen insbesondere gering ist, erhält man in günstiger Weise von Farbvermischungen freie Musterungsbilder im Bereich der Sichtfläche des Bodenbelags.

Im Rahmen der vorliegenden Erfindung können alle für die Herstellung von Bodenbelägen geeigneten, elastomeren Werkstoffe Verwendung finden, beispielsweise solche mit den genormten Bezeichnungen SBR, NBR, EPDM oder Naturkautschuk sowie Abmischungen hiervon.

Das, bezogen auf die Farbe der Bahn, kontrastfarbene Granulat läßt sich erhalten, indem kontrastfarbene Gummimischungen unabhängig voneinander erzeugt, unter Verwendung von Extrudern in die Gestalt von Strängen überführt und anschließend granuliert werden. Die verschiedenfarbigen Fraktionen der einzelnen Granulate werden anschließend nach Menge und Farbe so zusammengefaßt und der in einer ersten Farbe eingefärbten Bahn zugeordnet, daß sich bei einer homogenen Durchmischung sämtlicher Bestandteile wiederum die Farbe der Bahn ergibt. Eine solche Durchmischung oder Homogenisierung wird selbstverständlich nur vorgenommen, wenn bei der Herstellung des Bodenbelages Abfallprodukte zurückbleiben und erneut in den Produktionsprozess eingegeben werden sollen.

Es besteht auch die Möglichkeit, unabhängig voneinander erzeugte, kontrastfarbene Gummimischungen unter Verwendung eines einzigen Extruders gemeinsam in die Form von verschiedenfarbigen Strängen zu überführen und diese anschließend zu granulieren und auf die in einer ersten Farbe eingefärbten Bahn in einer solchen Menge und Farbverteilung der Fraktionen aufzustreuen, daß die sich bei einer homogenen Durchmischung aller in dem Gebilde enthaltenen Bestandteile ergebende Mischfarbe mit der ersten Farbe übereinstimmt. Wichtig ist es in bezug auf die Herstellung von mehrfarbigen Partikeln dieser Art lediglich, daß die zu dessen Herstellung verwendeten, kontrastfarbenen Gummimischungen während der Verarbeitung in dem Extruder an einer gegenseitigen Durchmischung im Bereich der Farbgrenzen gehindert werden. Das läßt sich erreichen durch Vermischung in einem Extruder unter besonders schonenden Bedingungen. Hierunter ist insbesondere zu verstehen, daß Temperaturen von mehr als 100°C vermieden werden sowie weitere Beanspruchungen, die zu einer völligen Aufschließung der eingesetzten Gummimischungen führen können.

Die erfindungsgemäßen Verfahren gestatten es, die kontrastfarbenen Granulate besonders gut in den die Bahn bildenden Werkstoffkörper einzubinden, so daß beim Dorn-Biegeversuch nach DIN 51949 unter Verwendung eines Dornes von 20 mm Durchmesser und einer Materialdicke der Bahn von 2 mm keine Trennung an der Korngrenze zwischen den in die Bahn eingebetteten Partikeln und dem Grundmaterial zu beobachten ist. Die oberflächenbünding in die Bahn einvulkanisierten Partikel bilden mit der Oberfläche der Bahn eine einzige, lückenfreie Fläche.

Der bei der Erzeugung des erfindungsgemäßen Bodenbelages entstehende Abfall kann in jeder beliebigen Menge wiederverwendet werden in Bezug auf die Erzeugung eine Bodenbelages, der mit dem zunächst erzeugten Bodenbelag völlig übereinstimmt. Unter wirtschaftlichen Gesichtspunkten ist das von großem Vorteil.

Die Erfindung wird nachfolgend anhand der Zeichnung weiter verdeutlicht. Es zeigen:
Fig. 1 in schematischer Darstellung die Herstellung von Partikeln, die kontrastfarbene Partikelsektionen aufweisen.
Fig. 2 in schematischer Darstellung die Herstellung von Partikeln, die homogen eingefärbt sind.
Fig. 3 in schematischer Darstellung die Herstellung eines Bodenbelages der erfindungsgemäßen Art.
Fig. 4 einen Ausschnitt aus einem Bodenbelag der erfindungsgemäßen Art in einer Ansicht von oben.
Fig. 5 den Bodenbelag gemäß Fig. 4 in quergeschnittener Darstellung.

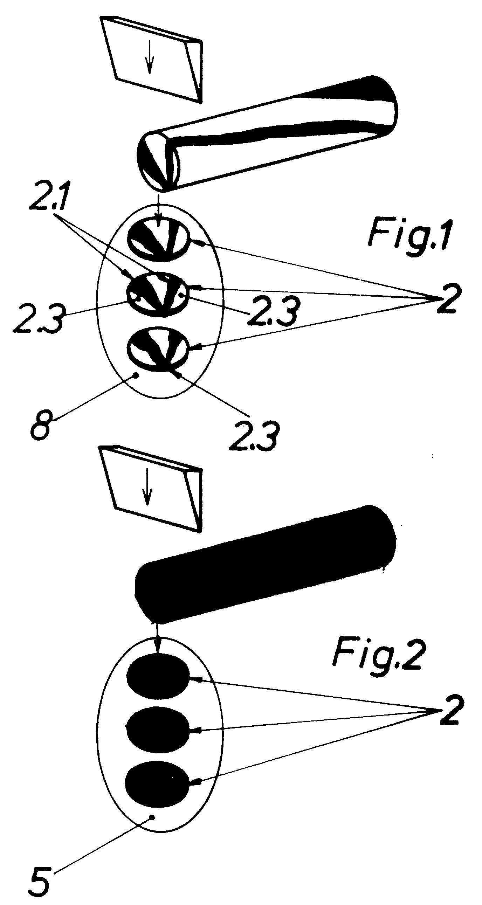

Die Fig. 1 uns 2 verdeutlichen die Herstellung von Granulaten, die in bezug auf die Herstellung des erfindungsgemäßen Bodenbelages zur Anwendung gelangen können. Zu ihrer Herstellung dienen Kautschukmischungen einer definierten Einfärbung. Sie können aus natürlichen und/oder synthetischen Ausgangsprodukten bestehen und werden unter Verwendung der in der Gummiindustrie gebräuchlichen Mischeinrichtungen erzeugt, beispielsweise unter Verwendung von Knetern, Walzwerken und/oder Extrudern. In der Endstufe sind die jeweils eingesetzten Kautschukmischungen in die Form von zylindrischen Körpern überführt, von denen aufeinanderfolgend kurze Abschnitte abgetrennt werden, die in ihrer Gesamtheit ein Granulat bilden.

Die Granulate können kontrastfarbene Partikelsektionen 2.1, 2.3 aufweisen, wie in Fig. 1 gezeigt. Sie lassen sich erhalten, in dem zumindest zwei kontrastfarbene Kautschukstränge mit Hilfe eines Extruders schonend in die Gestalt eines säulenförmigen Körpers überführt werden, wie in Fig. 1 oben gezeigt. Dazu ist es lediglich erforderlich, die in dem Extruder wirksamen Reibungskräfte so weit herabzusetzten, daß eine gegenseitige Durchmischung der in den Strängen enthaltenen Farbkomponenten vermieden wird. Die Erfüllung dieser Bedienung läßt sich relativ einfach kontrollieren anhand des äußeren Erscheinungsbildes des säulenförmigen Körpers. Immer dann, wenn dieser im Bereich seiner Außenseite porenfrei ist und ein von Farbverwischungen freies, klar strukturiertes Musterungsbild aufweist, dann ist ein derart präzises strukturiertes Musterungsbild auch im Inneren des säulenförmigen Körpers vorhanden. Der Körper kann ein kreisförmig begrenztes Profil haben, wie in den Fig. 1 und 2 gezeigt, jedoch bedarfsweise auch jedes andere Profil, beispielsweise ein Polygonprofil oder ein Profil, das sowohl ebene als auch gewölbte Umfangsfläche in sich vereint.

In Fig. 1 wird die Herstellung eines Granulates 8 gezeigt, das Partikel 2 mit kontrastfarbenen Partikelsektionen 2.1, 2.3 aufweist, in Fig. 2 die Herstellung eines Granulates 5, bei dem die einzelnen Partikel homogen eingefärbt sind und übereinstimmend dieselbe Farbe haben.

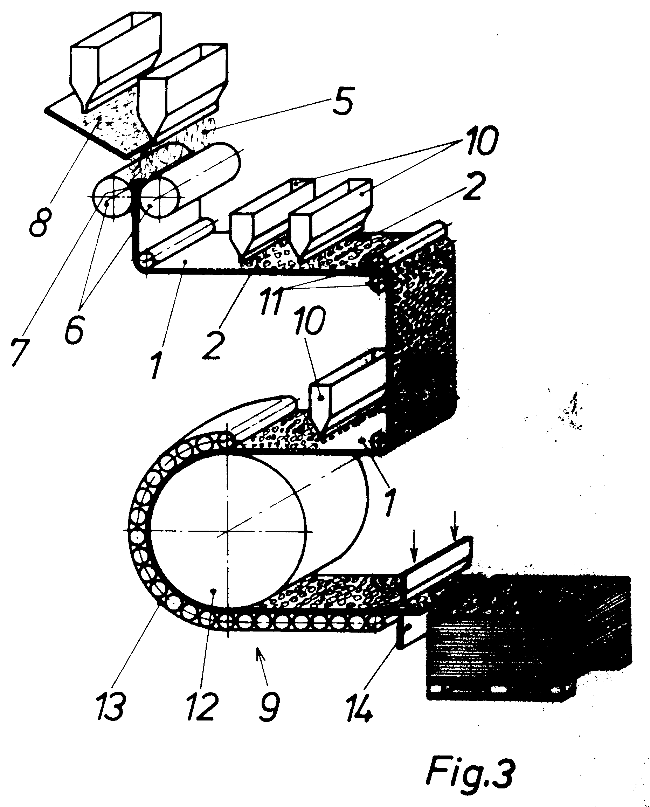

Die weitere Verwendung und Überführung der Partikel in die Gestalt eines Bodenbelages wird in schematischer Darstellung in Fig. 3 gezeigt. Am Beginn ist ein Kalander vorgesehen, der zwei gegenläufige Kalanderwalzen 6 aufweist, die sich um horizontal angeordnete Achsen drehen. In den Walzenspalt der beiden Walzen 6 wird zentrischen von oben ein homogen in einer ersten Farbe eingefärbtes Granulat 5 eingestreut, das zur Bildung der Matrix des Bodenbelages bestimmt ist, sowie in Richtung der einen Walze 6 relativ verlagert ein weiteres Granulat 8, das zur Erzeugung eines Musterungsbildes im Bereich der Oberseite des Bodenbelages bestimmt ist. Das zweite Granulat 8 umfaßt Partikel mit zumindest zwei inbezug auf das erste Granulat 5 kontrastfarbenen Partikelsektionen ähnlich der in Fig. 1 gezeigten Art. Es kann auch Partikel umfassen, die in sich homogen eingefärbt, jedoch kontrastfarben sind in bezug auf die Partikel 5. Desweiteren ist es möglich, weiteres kontrastfarbenes Granulat alternativ und/oder ergänzend in Richtung der anderen Walze 6 verlagert von oben in den Walzenspalt einzugeben.

Im Walzenspalt wird die Gesamtheit des von oben zugeführten Granulats in die Form einer porenfreien Bahn überführt. Dabei ist zu beobachten, daß das in Bezug auf die Mitte des Spaltes der Walzen 6 heraus in Richtung der einen und/oder der anderen Walze 6 relativ verlagert zugeführte, kontrastfarbene Granulat 8 ohne nennenswerte Lageveränderung in die Bahn 1 überführt wird. Dadurch ist es möglich, die das kontrastfarbene Granulat 8 bildenden Partikel bedarfsweise auch in willkürlich vorherbestimmbarer Weise einzugeben ohne nennenswerte Lageänderung in die Bahn 1 einzubetten um auf diese Weise willkürlich vorherbestimmbare Musterungsbilder zu erzeugen.

Die porenfreie Bahn 1 kann nach dem Verlassen des Spaltes der beiden Walzen 6 bedarfsweise unter weiteren Streueinrichtungen 10 hindurchgeführt und mit weiteren, kontrastfarbenen Partikeln 2 aus Kautschuk bestreut werden. Sofern eine Umlenkung in eine Rücklage vorgesehen ist, ist dabei empfehlenswert, die zunächst nur lose aufgestreuten Partikel 2 mit Hilfe eines zusätzlichen Walzwerks 11 in die noch aus unvulkanisiertem Kautschuk bestehende Bahn 1 einzupressen bzw. so fest an die Bahn anzupressen, daß sich eine feste Haftung ergibt. Eine entsprechende Andrückeinrichtung kann entfallen, wenn eine entsprechende Umlenkung der Bahn nicht vorgesehen ist und eine kontinuierliche Vulkanisationsmaschine 9 zur Anwendung gelangt, wie in Fig. 3 gezeigt. Diese besteht im wesentlichen aus einer langsam umlaufenden Vulkanisiertrommel 12, an die die zu vulkanisierende Bahn mit Hilfe eines der Drehbewegung der Vulkanisiertrommel folgenden Stahlbandes angepreßt und zugleich vulkanisiert wird. Nach dem Verlassen der Vulkanisiertrommel liegt der gebrauchsfertige Bodenbelag vor. Von diesen werden im allgemeinen Fliesen mit Hilfe eines Schneidwerkes 14 abgetrennt, gestapelt und der bestimmungsgemäßen Verwendung zugeführt. Ein Aufrollen des fertigen Bodenbelages ist ebenfalls möglich und kann die nachfolgende Verlegung verinfachen.

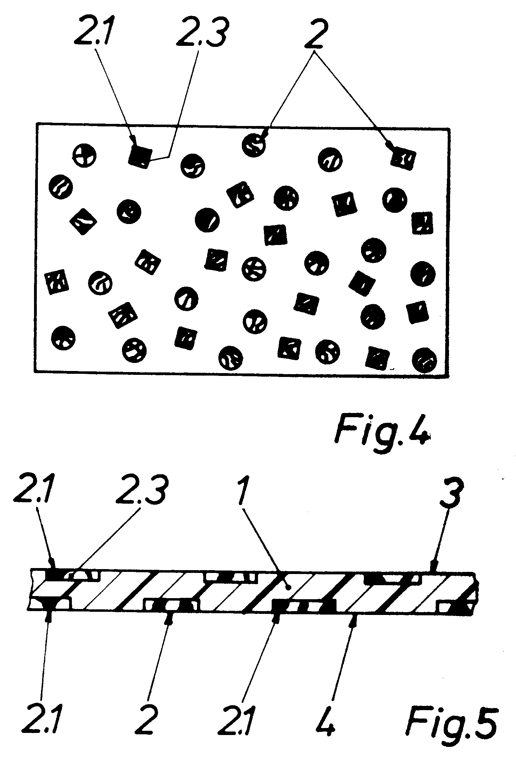

Ein Muster des Bodenbelages in einer Ansicht von oben wird in Fig. 4 gezeigt. Dieser besteht durchgehend aus vulkanisiertem Gummi und enthält in einer homogen eingefärbten Bahn 1 kontrastfarbene Partikel 2, die zumindest zwei kontrastfarbene Partikelsektionen 2.1, 2.3 umfassen. Die Partikel 2 können von willkürlich gewähltem Querschnitt sein.

Fig. 5 zeigt den Bodenbelag nach Fig. 4 in einer quergeschnittenen Darstellung. Es wird verdeutlicht, daß die kontrastfarbenen Partikel 2 bei dieser Ausführung bevorzugt sowohl im Bereich der Oberseite 3 als auch im Bereich der Unterseite 4 des Fußbodenbelages angeordnet sind.

## Patentansprüche

1. Mehrfarbig gemusterter Bodenbelag einer Dicke von 1 bis 4 mm, bestehend aus einer Bahn (1), die eine erste Farbe aufweist, und kontrastfarbenen Partikeln (2), welche in die Bahn (1) eingebettet sind und die Bahn (1) und die Partikel (2) aus vernetzbarem, elastomerem Werkstoff bestehen, wobei die Menge und Farbe der Partikel so gewählt und mit der Menge und Farbe des die Bahn (1) bildenden Werkstoffkörpers abgestimmt sind, daß sich bei einer homogenen Durchmischung aller in dem Bodenbelag enthaltenen Bestandteile ergebende Mischfarbe mit der ersten Farbe im wesentlichen übereinstimmt, **dadurch gekennzeichnet**, daß die kontrastfarbenen Partikel (2) solche umfassen, die zumindest zwei voneinander und von der Bahn (1) abweichend eingefärbte Partikelsektionen (2.1) auf der Oberfläche der Bahn (1) aufweisen, wobei jede abweichend eingefärbte Partikelsektion (2.1) von der Oberfläche der Bahn (1) sich durchgehend über die Partikeldicke ersteckt und daß die Abstimmung von Menge und Farbe der Partikel auf die Menge und Farbe des die Bahn (1) bildenden Werkstoffkörpers die Partikelsektionen (2.1) mit einschließt.

2. Bodenbelag nach Anspruch 1, **dadurch gekennzeichnet**, daß Partikel (2) vorhanden sind, die zumindest drei verschiedenfarbige Partikelsektionen (2.1) aufweisen.

3. Bodenbelag nach Anspruch 1 bis 2, **dadurch gekennzeichnet**, daß die Partikel (2) einen Abstand voneinander haben.

4. Bodenbelag nach Anspruch 1 bis 3, **dadurch gekennzeichnet**, daß die Partikel (2) in einem willkürlich vorgegebenen Muster verteilt sind.

5. Bodenbelag nach Anspruch 1 bis 4, **dadurch gekennzeichnet**, daß die Partikel (2) nur in die Oberseite (3) der Bahn (1) eingebettet sind.

6. Bodenbelag nach Anspruch 5, **dadurch gekennzeichnet**, daß zusätzlich zur Oberseite (3) in die Unterseite (4) der Bahn (1) Partikel (2) eingebettet sind.

7. Bodenbelag nach Anspruch 6, **dadurch gekennzeichnet**, daß die Menge der in die Oberseite (3) eingebetteten Partikel (2) größer ist als die Menge der in die Unterseite (4) eingebetteten Partikel (2).

8. Bodenbelag nach Anspruch 7, **dadurch gekennzeichnet**, daß die Oberseite (3) diskrete Farbflächen zwischen 1 und 25 mm² aufweist.

9. Bodenbelag nach Anspruch 1 bis 8, **dadurch gekennzeichnet**, daß die kontrastfarbenen Partikel (2) und Partikelsektionen (2.1) in einer Menge, bezogen auf das Gewicht der Bahn (1) von 80 bis 450 g/m² vorliegen.

10. Verfahren zur Herstellung eines mehrfarbig gemusterten Bodenbelags nach einem der vorangehenden Ansprüche, bei dem eine homogen in einer ersten Farbe eingefärbte Bahn aus Kautschuk ein kontrastfarbenes Granulat aus Kautschuk mit Partikeln eingebracht wird, welche durch nachfolgende Vulkanisierung bleibend festgelegt werden, und bei dem die Bahn nach Menge und Farbe des sie bildenden Kautschuks so mit dem Granulat nach Menge und Farbe der enthaltenen Partikel abgestimmt wird, daß die sich bei einer homogenen Durchmischung aller in den Bodenbelag enthaltenen Bestandteile ergebende Mischfarbe mit der ersten Mischfarbe im wesentlichen übereinstimmt, **dadurch gekennzeichnet**, daß die Partikel mindestens zwei voneinander und von der Bahn abweichend eingefärbte Partikelsektionen auf der der Oberfläche der Bahn umfassen, wobei jede abweichend eingefärbte Partikelsektion (2.1) von der Oberfläche der Bahn (1) sich durchgehend über die Partikeldicke erstreckt und die Partikelsektionen bei der Mengen- und Farbabstimmung mit einbezogen werden.

11. Verfahren nach Anspruch 10, **dadurch gekennzeichnet**, daß das kontrastfarbene Granulat (8) eingebracht wird, indem zur Bildung der Bahn (1) ein homogen in einer ersten Farbe eingefärbtes, erstes Granulat (5) aus Kautschuk von oben in den Spalt zwischen zwei gegenläufigen, um horizontale Achsen umlaufende Walzen (6) eingegeben und mit einem kontrastfarbenen, zweites Granulat (8) versetzt wird und daß die so erhaltene Schüttung (7) in dem Spalt unter Vermeidung einer gegenseitigen Durchmischung der Farbgrenzen der die Granulate (5, 8) bildenden Partikel porenfrei verdichtet wird.

12. Verfahren nach Anspruch 10, **dadurch gekennzeichnet**, daß dem ersten Granulat das zweite Granulat, bezogen auf die Mitte des Spaltes, in Richtung der einen und/oder anderen Walze (6) relativ verlagert zugeführt wird.

13. Verfahren nach Anspruch 10, **dadurch gekennzeichnet**, daß das kontrastfarbene Granulat aus Kautschuk mit den Partikeln mit Partikelsektionen durch Aufstreuen aufgebracht wird, und daß die Partikel danach mittels eines Walzenkalanders, einer kontinuierlichen Vulkanisationsmaschine oder einer Presse bei einer Temperatur von 160°C bis 190°C oberflächenbündig in die Bahn eingepreßt werden.

## Claims

1. A floor covering of 1 to 4 mm thickness having a multi-coloured pattern, comprising a web (1) which has a first colour and particles (2) of contrasting colour which are embedded in the web (1), and the web (1) and the particles (2) being composed of crosslinkable elastomeric material, the amount and colour of the particles being so chosen and coordinated with the amount and colour of the material body which forms the web (1) that the blended colour resulting on homogeneous thorough mixing of all the constituents contained in the floor covering essentially coincides with the first colour, characterized in that the particles (2) of contrasting colour comprise particles which have at least two particle sections (2.1) on the surface of the web (1) which are coloured differently from one another and from the web (1), each differently coloured particle section (2.1) extending continuously from the surface of the web (1) over the particle thickness, and in that the coordination of the amount and colour of the particles with the amount and colour of the material body forming the web (1) also includes the particle sections (2.1).

2. A floor covering according to claim 1, characterized in that particles (2) which have at least three differently coloured particle sections (2.1) are present.

3. A floor covering according to either of claim 1 and 2, characterized in that the particles (2) are spaced apart from one another.

4. A floor covering according to any of claim 1 to 3, characterized in that the particles (2) are distributed in an arbitrarily predetermined pattern.

5. A floor covering according to any of claims 1 to 4, characterized in that the particles (2) are embedded in only the upper side (3) of the web (1).

6. A floor covering according to claim 5, characterized in that particles (2) are embedded in the underside (4) of the web (1) in addition to the upper side (3).

7. A floor covering according to claim 6, characterized in that the amount of particles (2) embedded in the upper side (3) is greater than the amount of particles (2) embedded in the underside (4).

8. A floor covering according to claim 7, characterized in that the upper side (3) has discrete colour areas of from 1 to 25 mm².

9. A floor covering according to any of claims 1 to 8, characterized in that the particles (2) and particle sections (2.1) of contrasting colour are present in an amount of from 80 to 450 g/m², based on the weight of the web (1).

10. A process for the production of a floor covering having a multi-coloured pattern according to any one of the preceding claims, in which a web of rubber coloured homogeneously in a first colour has incorporated into it granules of rubber of contrasting colour which comprise particles which are fixed permanently by subsequent vulcanization, and in which the amount and colour of the rubber forming the web are so coordinated with the amount and colour of the particles contained in the granules that the blended colour resulting on homogeneous thorough mixing of all the constituents contained in the floor covering essentially coincides with the first blended colour, characterized in that the particles comprise at least two particle sections on the surface of the web which are coloured differently from one another and from the web, each differently coloured particle section (2.1) extending continuously from the surface of the web (1) over the particle thickness, and the particle sections are also included in the coordination of amounts and colours.

11. A process according to claim 10, characterized in that the granules (8) of contrasting colour are incorporated by a procedure in which, to form the web (1), first granules (5) of rubber coloured homogeneously in a first colour are introduced from the top into the nip between two rolls (6) running in opposite directions and rotating about horizontal axes and second granules (8) of contrasting colour are added, and in that the bulk material (7) thus obtained is compacted in a pore-free manner in the nip, mutual thorough mixing of the colour boundaries of the particles forming the granules (5, 8) being avoided.

12. A process according to claim 10, characterized in that the second granules are added to the first granules with a relative displacement in the direction of one and/or other of the rolls (6) with respect to the centre of the nip.

13. A process according to claim 10, characterized in that the granules of rubber of contrasting colour comprising the particles having particle sections are applied by sprinkling, and in that the particles are then pressed into the web flush with the surface by means of a roll calender, a continuous vulcanization machine or a press at a temperature of from 160°C to 190°C.

## Revendications

1. Revêtement de sol multicolore à motifs, d'une épaisseur de 1 à 4 mm, formé par un lé (1) d'une première couleur et par des particules (2) de tons opposés qui sont intégrées au lé (1) et le lé (1) et les particules (2) sont formés d'une matière élastomère réticulable, la quantité et la couleur des particules étant choisies et adaptées à la quantité et à la couleur du corps de matériau formant le lé (1) de façon à ce que la couleur mixte résultant d'un mélange homogène de tous les composants contenus dans le revêtement de sol soit essentiellement identique à la première couleur, caractérisé en ce que les particules (2) de tons opposés comprennent des particules qui comportent, à la surface du lé (1), au moins deux sections de particule (2.1) dont la couleur diverge d'une section à l'autre ainsi que de la couleur du lé (1), chaque section de particule (2.1) de couleur divergente s'étendant de manière continue de la surface du lé (1) sur l'épaisseur des particules, et en ce que, pour adapter la quantité et la couleur des particules à la quantité et à la couleur du corps de matériau formant le lé (1), on inclut les sections de particules (2.1).

2. Revêtement de sol selon la revendication 1, caractérisé par la présence de particules (2) qui comportent au moins trois sections de particule (2.1) de couleurs différentes.

3. Revêtement de sol selon l'une des revendications 1 à 2, caractérisé en ce que les particules (2) sont situées à une distance les unes des autres.

4. Revêtement de sol selon l'une des revendications 1 à 3, caractérisé en ce que les particules (2) sont réparties selon un motif volontairement prédéfini.

5. Revêtement de sol selon l'une des revendications 1 à 4, caractérisé en ce que les particules (2) sont intégrées seulement à la face supérieure (3) du lé (1).

6. Revêtement de sol selon la revendication 5, caractérisé en ce que des particules (2) sont intégrées à la face inférieure (4) du lé (1) en plus de sa face supérieure (3).

7. Revêtement de sol selon la revendication 6, caractérisé en ce que la quantité de particules (2) intégrées à la face supérieure (3) est supérieure à la quantité de particules (2) intégrées à la face inférieure (4).

8. Revêtement de sol selon la revendication 7, caractérisé en ce que la face supérieure (3) comporte des surfaces colorées discrètes mesurant entre 1 et 25 mm².

9. Revêtement de sol selon l'une des revendications 1 à 8, caractérisé en ce que les particules (2) de tons opposés et les sections de particule (2.1) sont présentes en une quantité allant de 80 à 450 g/m² par rapport au poids du lé (1).

10. Procédé de fabrication d'un revêtement de sol multicolore à motifs selon l'une des revendications précédentes, dans lequel on ajoute à un lé en caoutchouc d'une première couleur homogène un granulé en caoutchouc de ton opposé comportant des particules qui sont fixées de manière durable par une vulcanisation consécutive, et dans lequel le lé est adapté, par la quantité et la couleur du caoutchouc le constituant, à la quantité et à la couleur des particules contenues dans le granulé, de façon à ce que la couleur mixte résultant d'un mélange homogène de tous les composants contenus dans le revêtement de sol soit essentiellement identique à la première couleur mixte, caractérisé en ce que les particules comprennent, à la surface du lé, au moins deux sections de particule dont la couleur diverge d'une section à l'autre ainsi que de la couleur du lé, chaque section de particule (2.1) de couleur divergente s'étendant de manière continue de la surface du lé (1) sur l'épaisseur des particules et les sections de particule étant incluses lorsque l'on adapte les quantités et les couleurs.

11. Procédé selon la revendication 10, caractérisé en ce que le granulé (8) de ton opposé est ajouté tandis qu'un premier granulé (5) en caoutchouc d'une première couleur homogène est introduit, pour former le lé (1), par le haut dans la fente située entre deux cylindres (6) tournant en sens contraire autour d'axes horizontaux et est mélangé à un second granulé (8) de ton opposé, et en ce que le mélange déversé (7) ainsi obtenu est comprimé dans la fente, sans pores, en évitant un mélange réciproque des limites de couleur des particules formant les granulés (5, 8).

12. Procédé selon la revendication 10, caractérisé en ce que le second granulé est ajouté au premier granulé avec un décalage relatif, par rapport au milieu de la fente, en direction de l'un et/ou de l'autre cylindre/s (6).

13. Procédé selon la revendication 10, caractérisé en ce que le granulé en caoutchouc de ton opposé comprenant les particules présentant des sections de particule est appliqué par saupoudrage, et en ce que les particules sont ensuite pressées dans le lé de manière à affleurer à la surface au moyen d'une calandre à rouleaux, d'une machine à vulcanisation continue ou d'une presse, à une température allant de 160°C à 190°C.
